# EUROPEAN PATENT APPLICATION

(11) **EP 3 598 408 A1**
(43) Date of publication of application: **22.01.2020**
(21) Application number: 18767658.0
(22) Date of filing: 13.03.2018
(51) Int. Cl.: G08C 17/00, G08C 15/00, H04Q 9/00

(54) **SENSOR DEVICE AND SENSOR NETWORK SYSTEM**

(30) Priority: 13.03.2017 JP 2017047820
(71) Applicant: Fujikura Ltd., Tokyo 135-8512 (JP)
(72) Inventor: KITO, Hiroyuki, Sakura-shi Chiba 285-8550 (JP); IWATSU, Katsuhiko, Sakura-shi Chiba 285-8550 (JP); NAKAYAMA, Masaki, Sakura-shi Chiba 285-8550 (JP); SEKI, Yasuyuki, Sakura-shi Chiba 285-8550 (JP); TAGUCHI, Taku, Sakura-shi Chiba 285-8550 (JP); KANEEDA, Kenta, Sakura-shi Chiba 285-8550 (JP)
(74) Representative: Lavoix
(86) International application number: PCT/JP2018/009716
(87) International publication number: WO 2018/168848

(57) **Abstract**

The sensor device includes a sensor that detects environment information; a sensor device communication unit configured to transmit the detected environment information to another sensor device; a battery that supplies electric power to the sensor and the sensor device communication unit; and a sensor device-side coupling unit configured to allow an auxiliary battery for supplying electric power to the sensor device to be detachably attached thereto, wherein, in a case in which the auxiliary battery is not attached, the sensor device is configured to operate with electric power supply from the battery, and in a case in which the auxiliary battery is attached, the sensor device is configured to operate with electric power supply from the battery or the auxiliary battery.

## Description

### Technical Field

The present invention relates to a sensor device and a sensor network system.

Priority is claimed on Japanese Patent Application No. 2017-047820, filed March 13, 2017, the content of which is incorporated herein by reference.

### Background Art

In recent years, a sensor system using an energy harvesting (environmental power generation) sensor such as a wireless sensor or a remote control switch that operates without a wire and battery replacement by obtaining electric energy from the surrounding environment due to reduction in power consumption of an electronic circuit or wireless technology has been attracting attention. For example, development of a broadband wireless module assumed to be operated for several years with one dry battery and development of a dye-sensitized solar cell for energy harvesting assumed for an indoor use under lightning such as a fluorescent lamp or a light emitting diode (LED) are in progress.

In a sensor system of a multi-pop wireless communication method, information measured by the sensor device is collected in a master device. In such a system, a sensor device distant from the master device transmits the information to the master device through a sensor device close to the master device. For example, in a case in which there are three sensor devices, namely a first sensor device, a second sensor device, and a third sensor device, in order of proximity to the master device, information transmitted by the third sensor device is transmitted to the master device through the second sensor device and the first sensor device. As described above, in the sensor system of the multi-pop wireless communication method, the first sensor device and the second sensor device do not only transmit their own information but also receive information from other devices and transmit the received information, that is, serve as repeaters. The repeater is required to wait for receiving information so as to receive information from other devices.

Patent Document 1 describes a data system that is a data collection system in which slave stations performing environmental data measurement and transmission are connected to each other by wireless mesh and the slave station operates with only a solar cell and also functions as a relay station.

### Document of Related Art

### Patent Document

[Patent Document 1] Japanese Unexamined Patent Application, First Publication No. 2003-044974

### Summary of Invention

### Technical Problem

However, there are various demands for sensor systems assumed to be used in various markets, and in order to be used in a broad market, sensor devices that can cope with a plurality of power supplies are required. In this point, in a case in which an environment allows easy battery replacement, energy harvesting power is unnecessary by an operation with an inexpensive built-in battery. On the other hand, since there is a case in which it is difficult to replace the battery, a case in which priority is given to maintenance costs, or the like, it is necessary to be able to cover them in many ways.

In addition, in a case in which the technology described in Patent Document 1 in which the slave station includes only the solar cell is applied to a sensor system of a multi-pop wireless communication method, since the slave station allocated to the repeater also performs waiting for receiving information, electric power consumption increases, and it may be difficult to operate with the electric power generated by the solar cell in some cases.

The present invention has been made in consideration of the circumstances described above, and an object of the present invention is to provide a sensor device and a sensor network system that can operate the system fluidly in accordance with electric power consumption in a multi-pop wireless communication method.

### Solution to Problem

In order to obtain the object described above, a sensor device of a first aspect of the present invention includes a sensor that detects environment information; a sensor device communication unit configured to transmit the detected environment information to another sensor device; a battery that supplies electric power to the sensor and the sensor device communication unit; and a sensor device-side coupling unit configured to allow an auxiliary battery for supplying electric power to the sensor device to be detachably attached thereto, wherein, in a case in which the auxiliary battery is not attached, the sensor device is configured to operate with electric power supply from the battery, and in a case in which the auxiliary battery is attached, the sensor device is configured to operate with electric power supply from the battery or the auxiliary battery.

In addition, the sensor device of the first aspect of the present invention may include a controller configured to switch to the auxiliary battery in a case in which a voltage of the auxiliary battery satisfies a predetermined reference and to switch to the battery in a case in which the voltage of the auxiliary battery does not satisfy the predetermined reference, when the auxiliary battery is attached.

In addition, the sensor device of the first aspect of the present invention may be configured to transmit environment information received from a first other sensor device to a second other sensor device.

In addition, in the sensor device of the first aspect of the present invention, the sensor device communication unit is configured to be regularly switched between a wake-up mode and a sleep mode having power consumption less than that of the wake-up mode, and to perform, at a time of operation in the wake-up mode, communication with a sensor device communication unit of another sensor device that operates in a wake-up mode.

In addition, in the sensor device of the first aspect of the present invention, the sensor device communication unit is configured to perform the communication with the sensor device communication unit of the other sensor device after acquiring synchronization of communication timing between the sensor device and the other sensor device.

In addition, the sensor device of the first aspect of the present invention may further include a switch configured to switch between operating with the electric power supply from the battery and operating with the electric power supply from the battery or the auxiliary battery.

In addition, in the sensor device of the first aspect of the present invention, the sensor device communication unit is configured to further transmit, to the other sensor device, information related to a voltage of the battery or information related to a voltage of the auxiliary battery.

In addition, in the sensor device of the first aspect of the present invention, the sensor device communication unit is configured to further transmit, to the other sensor device, information related to a state of a switch for setting a power supply that supplies electric power to the sensor device.

In addition, in the sensor device of the first aspect of the present invention, the sensor device communication unit is configured to further transmit, to the other sensor device, information related to a power supply that supplies electric power to the sensor device.

In addition, in the sensor device of the first aspect of the present invention, the sensor device communication unit is configured to further transmit, to the other sensor device, information related to a radio wave intensity between the sensor device and the other sensor device.

In addition, the sensor device of the first aspect of the present invention may further include a storage that temporarily stores the environment information; and a controller that discards the environment information stored in the storage in a case in which the environment information has not been transmitted to the other sensor device a predetermined number of times.

In addition, in the sensor device of the first aspect of the present invention, the sensor device communication unit is configured to receive setting information for the sensor device, and the sensor device is configured to set itself based on the setting information.

In addition, in the sensor device of the first aspect of the present invention, the sensor includes a plurality of sensors that detect different types of environment information, and the setting information includes information indicating one or more sensors to be used among the plurality of sensors.

In addition, in the sensor device of the first aspect of the present invention, the setting information includes information related to a time interval for transmitting the environment information.

In order to obtain the object described above, a sensor network system of a second aspect of the present invention includes the sensor device according to any one of claims 1 to 14; and a master device that receives the environment information from the sensor device and manages the environment information and the sensor device, wherein the sensor device is configured to transmit the environment information to the master device through another sensor device or directly in a state in which at least one of an identification number for identifying the sensor device, identification information of the master device that is a transmission destination, voltage information of the battery of the sensor device or voltage information of the attached auxiliary battery, and information related to power generation capacity of the auxiliary battery is included in the environment information, or is configured to transmit the environment information received from another sensor device to the master device through further another sensor device or directly, and in a case in which the sensor device includes a plurality of sensors, the master device is configured to indicate which one of the plurality of sensors to be used.

### Effects of Invention

According to the present invention, it is possible to fluidly operate a system in accordance with electric power consumption in a multi-pop wireless communication method.

### Brief Description of Drawings

FIG. 1 is a diagram showing a schematic configuration of a sensor network system in a multi-hop method of the present embodiment.
FIG. 2 is a block diagram showing a configuration example of a sensor system of the present embodiment.
FIG. 3 is a block diagram showing a configuration example of a master device of the present embodiment.
FIG. 4 is a diagram showing an example of predetermined references to be used for comparison by a voltage detection and comparison unit of a sensor device of the present embodiment.
FIG. 5 is a diagram showing an operation example of sensor device communication units of a plurality of sensor devices of the present embodiment.
FIG. 6 is a diagram showing an example of a construction procedure in the sensor network system of the present embodiment.
FIG. 7 is a block diagram showing a configuration example of a sensor system including a sensor device provided with a USB terminal of a modification example of the present embodiment.

### Description of Embodiments

Hereinafter, an embodiment of the present invention will be described with reference to the drawings.

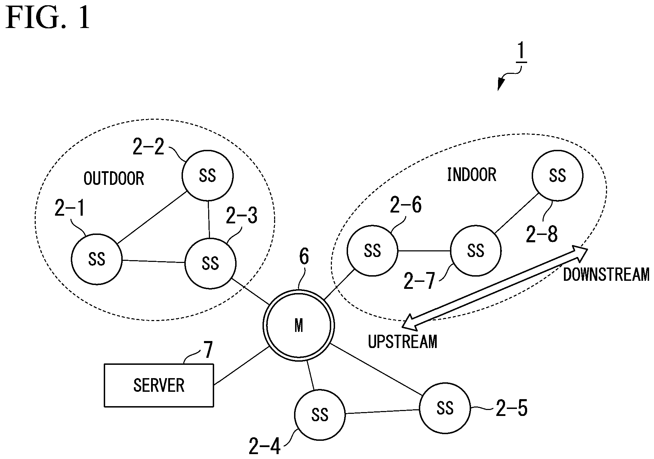

FIG. 1 is a diagram showing a schematic configuration of a sensor network system 1 in a multi-hop method of the present embodiment.

As shown in FIG. 1, the sensor network system 1 of the multi-hop method includes a plurality of sensor systems 2-1, 2-2, ... (SS), a master device 6 (M), and a server 7. Hereinafter, in a case in which one of the sensor systems 2-1, 2-2, ... is not specified, the sensor systems 2-1, 2-2, ... are referred to as a sensor system 2.

The sensor system 2 transmits environment information measured by a sensor included in the sensor system 2 (or environment information including environmental data measured by the sensor) to the master device 6 directly or through another sensor system 2. Note that a timing at which the sensor system 2 transmits the environment information is a predetermined time interval, for example, once every five minutes. The sensor system 2 receives setting information for the predetermined time interval from the master device 6, and sets the time interval in accordance with the received setting information.

The master device 6 receives information from all the sensor systems 2 connected to the sensor network system 1 and manages all the sensor systems 2. In addition, the master device 6 transmits setting information or firmware to the sensor system 2 as necessary. The master device 6 transmits the information including the environment information received from the sensor system 2 to the server 7.

The server 7 stores the information from the sensor system 2 received from the master device 6 and performs analysis or the like of the stored data.

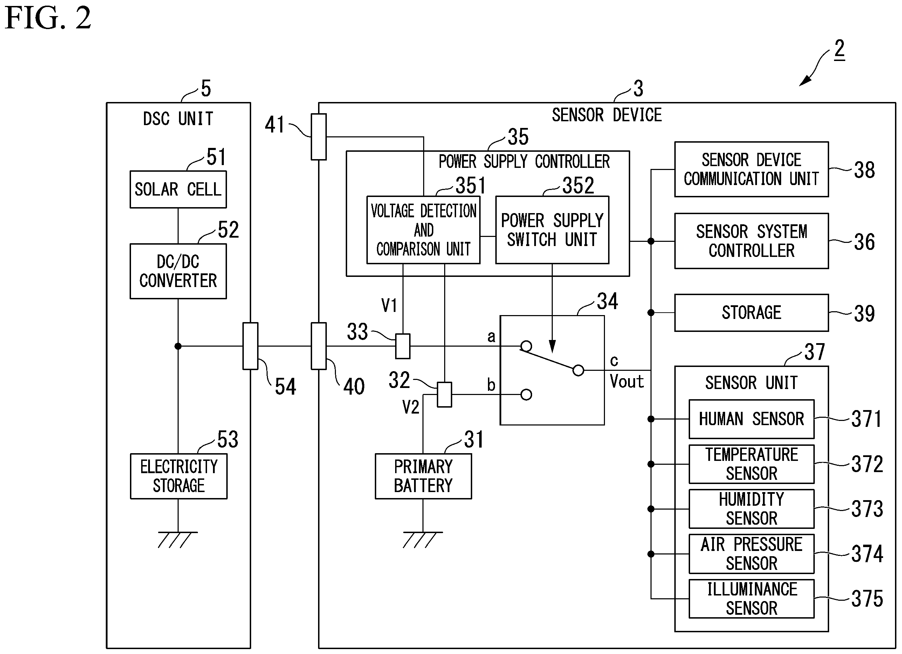

FIG. 2 is a block diagram showing a configuration example of the sensor system 2 of the present embodiment.

As shown in FIG. 2, the sensor system 2 includes a sensor device 3 and a DSC unit 5.

The sensor device 3 includes a primary battery 31 (battery), a primary battery voltage detector 32, an electricity storage voltage detector 33, a power supply changeover switch 34, a power supply controller 35 (controller), a sensor system controller 36, a sensor unit 37, a sensor device communication unit 38, a storage 39, a sensor device-side coupling unit 40, and a power supply setting switch 41. The power supply controller 35 includes a voltage detection and comparison unit 351 and a power supply switch unit 352. The sensor unit 37 includes a human sensor 371, a temperature sensor 372, a humidity sensor 373, an air pressure sensor 374, an illuminance sensor 375, and the like. The type of the sensor included in the sensor unit 37 can be changed as appropriate.

The DSC unit 5 is an auxiliary battery including a solar cell 51, a DC/DC converter 52, an electricity storage 53, and a DSC unit-side coupling unit 54.

The sensor device 3 transmits a measurement value measured by each sensor to another sensor device 3 or the master device 6. In addition, the sensor device 3 receives information (environment information) from another sensor device 3 (a first other sensor device), and transmits the received information to further another sensor device 3 (a second other sensor device) or the master device 6. Note that the transmission destination of the information is, as shown in FIG. 1, the master device 6 even if the information is transmitted through the other sensor device 3 or even if the information is transmitted directly. That is, the sensor device 3 is configured to transmit the environment information to the master device 6 through the other sensor device 3 or directly, or is configured to transmit the environment information received from the other sensor device 3 to the master device 6 through further another sensor device 3 or directly.

The sensor device 3 allows the DSC unit 5 to be detachably attached thereto.

The primary battery 31 is, for example, a battery with a normal voltage value of 3.0 V. A positive electrode of the primary battery 31 is connected to an input terminal b of the power supply changeover switch 34 through the primary battery voltage detector 32, and a negative electrode thereof is grounded.

The primary battery voltage detector 32 detects a voltage value V2 of the primary battery 31, and outputs the detected voltage value V2 to the power supply controller 35.

When the DSC unit 5 is connected to the sensor device 3, the electricity storage voltage detector 33 detects a voltage value V1 output from the DSC unit 5 and information related to a power generation capacity of the DSC unit 5, and outputs the detected voltage value V1 and the information related to the power generation capacity of the DSC unit 5 to the power supply controller 35. An example of the information related to the power generation capacity of the DSC unit 5 includes the model number, the power generation method, the size of the panel or the like of the solar cell 51.

An input terminal a of the power supply changeover switch 34 is connected to the DSC unit 5 through the electricity storage voltage detector 33 and the sensor device-side coupling unit 40, the input terminal b thereof is connected to the positive electrode of the primary battery 31 through the primary battery voltage detector 32, and an output terminal c thereof is connected to the sensor system controller 36, the sensor unit 37, and the sensor device communication unit 38. In addition, a voltage output from the output terminal c is referred to as Vout.

In addition, in accordance with the control of the power supply controller 35, the power supply changeover switch 34 switches electric power supplied from the DSC unit 5 or electric power of the primary battery 31 to be supplied to the sensor system controller 36, the sensor unit 37, and the sensor device communication unit 38.

The power supply setting switch 41 is, for example, a slide switch or a dual in-line package (DIP) switch that is switched by a manager of the sensor device 3 depending on whether the DSC unit 5 is connected. For example, a first state of the power supply setting switch 41 is a state in which the DSC unit 5 is not connected, and a second state thereof is a state in which the DSC unit 5 is connected.

The power supply controller 35 compares each voltage value detected by the primary battery voltage detector 32 and the electricity storage voltage detector 33 with a predetermined reference stored in itself, and performs control to switch the power supply changeover switch 34 in accordance with a comparison result. Note that the predetermined reference will be described later. In addition, the power supply controller 35 outputs each detected voltage value, the information related to the power generation capacity of the DSC unit 5, and a switch state of the power supply changeover switch 34 to the sensor system controller 36.

Furthermore, the power supply controller 35 detects a state of the power supply setting switch 41, and in a case of the first state, the power supply controller 35 controls the power supply changeover switch 34 to be connected to the primary battery 31 regardless of the comparison result. In addition, the power supply controller 35 detects the state of the power supply setting switch 41, and in a case of the second state, the power supply controller 35 compares each voltage value detected by the primary battery voltage detector 32 and the electricity storage voltage detector 33 with the predetermined reference stored in itself and performs control to switch the power supply changeover switch 34 in accordance with the comparison result. That is, the power supply setting switch 41 is configured to switch between operating of the sensor device 3 with electric power supply from the primary battery 31 and operating of the sensor device 3 with electric power supply from the primary battery 31 or the DSC unit 5.

The voltage detection and comparison unit 351 compares each voltage value detected by the primary battery voltage detector 32 and the electricity storage voltage detector 33 with the predetermined reference stored in itself. The voltage detection and comparison unit 351 generates a switch signal for the power supply changeover switch 34 in accordance with the comparison result, and outputs the generated switch signal to the power supply switch unit 352. Furthermore, the voltage detection and comparison unit 351 detects the state of the power supply setting switch 41, and in a case of the first state, the voltage detection and comparison unit 351 generates the switch signal for connecting the power supply changeover switch 34 to the primary battery 31 regardless of the comparison result and outputs the generated switch signal to the power supply switch unit 352.

The power supply switch unit 352 switches the power supply changeover switch 34 in accordance with the switch signal output from the voltage detection and comparison unit 351.

The sensor system controller 36 generates the environment information by adding an identifier (identification number) for identifying the sensor device 3 (in which the sensor system controller 36 is provided) to detection result information or the measurement value (that is, the environmental data) output from the sensor unit 37, and makes the storage 39 store the generated environment information. The sensor system controller 36 outputs the environment information stored in the storage 39 to the sensor device communication unit 38. Note that the sensor system controller 36 discards the environment information stored in the storage 39 in a case in which the environment information has not been transmitted three times consecutively. The sensor system controller 36 may discard the environment information stored in the storage 39 in a case in which the environment information has not been transmitted to the other sensor device 3 or the master device 6 through the sensor device communication unit 38 a predetermined number of times. As described above, the environment information stored in the storage 39 by the sensor system controller 36 is the latest environmental data, the fixed identification information, and the like. Note that the sensor system controller 36 may make the storage 39 store only the latest environment data without discarding the fixed identification information and the like from the storage 39.

The sensor system controller 36 outputs the received environment information to the sensor device communication unit 38 again so as to transmit the environment information received from the other sensor device 3 through the sensor device communication unit 38 to further another sensor device 3 or the master device 6. Note that the sensor system controller 36 may make the storage 39 temporarily store the environment information received from the other sensor device 3 through the sensor device communication unit 38, and may output the environment information again to the sensor device communication unit 38 so as to transmit the stored environment information. The sensor system controller 36 sets a sensor to be used and the time interval at which each sensor performs sensing on the basis of a configuration received from the master device 6. Therefore, optimal sensing for each of a plurality of sensor devices 3 can be realized with the minimum electric power. Furthermore, in a case in which each sensor can shift to an electric power saving operation state, the sensor system controller 36 may control a sensor not to be used into the electric power saving operation state. In addition, the sensor system controller 36 may generate the voltage value V2 (or voltage information corresponding to the voltage value V2) of the primary battery 31, the voltage value V1 (or voltage information corresponding to the voltage value V1) to be output by the DSC unit 5, the information related to the power generation capacity of the DSC unit 5, and the information indicating the state of the power supply setting switch 41 and the state of the power supply changeover switch 34, and may transmit the generated information to the master device 6 through the sensor device communication unit 38. In addition, the sensor system controller 36 includes a clocking unit and performs clocking. The sensor device communication unit 38 of the sensor device 3 may further be configured to transmit, to the other sensor device 3 or the master device 6, the information related to a power supply (the voltage value V2 (or the voltage information corresponding to the voltage value V2) of the primary battery 31, the voltage value V1 (or the voltage information corresponding to the voltage value V1) to be output by the DSC unit 5, or the power generation capacity of the DSC unit 5) for supplying the electric power to the sensor device 3, or the information related to the state of the power supply setting switch 41 that sets the power supply or to the state of the power supply changeover switch 34.

Note that the power supply controller 35 and the sensor system controller 36 may be a known computer including a central processing unit (CPU), a random access memory (RAM), a read only memory (ROM), and the like that can execute the above-described control. The details of the control by the power supply controller 35 and the sensor system controller 36 may be defined by software that can be arbitrarily changed or updated by a manager.

The sensor unit 37 outputs the detection result information indicating the detected result or the measured value (that is, the environmental data) to the sensor system controller 36.

The human sensor 371 is a sensor for detecting whereabouts of a human using, for example, infrared light, ultrasonic waves, and visible light. The human sensor 371 outputs the detection result information indicating the detected result to the sensor system controller 36.

The temperature sensor 372 measures the temperature, and outputs the measured value to the sensor system controller 36.

The humidity sensor 373 measures humidity and outputs the measured value to the sensor system controller 36.

The air pressure sensor 374 measures the air pressure and outputs the measured value to the sensor system controller 36.

The illuminance sensor 375 measures the illuminance and outputs the measured value to the sensor system controller 36.

The sensor device communication unit 38 transmits the information output by the sensor system controller 36 to the other sensor device 3 or the master device 6. In addition, the sensor device communication unit 38 outputs the information received from the other sensor device 3 or the master device 6 to the sensor system controller 36. The information to be received includes, for example, the environment information, the identifier for identifying the sensor device 3, and the like. In addition, the sensor device communication unit 38 measures the radio wave intensity (RSSI) by communication with the other sensor devices 3, and further acquires the RSSI between the sensor device 3 and the other sensor device 3 and the number of hops from each sensor device 3 to the master device 6, thereby determining a parent-child relationship in communication and a path of the communication. That is, the sensor device communication unit 38 is configured to further transmit information related to the radio wave intensity between the sensor device 3 and the other sensor device 3, to the other sensor devices 3 or the master device 6.

In addition, the sensor device communication unit 38 of the sensor device 3 can receive setting information for the sensor device 3 from the master device 6 (or from the master device 6 through the other sensor device 3), and the sensor device 3 is configured to set itself based on the setting information. In a case in which the sensor included in the sensor device 3 includes a plurality of sensors that detect different types of environment information, the setting information includes information indicating one or more sensors to be used among the plurality of sensors. That is, it is possible to set which sensor among the plurality of sensors to be used. In addition, the setting information may include the information related to the time interval for transmitting the environment information.

The storage 39 temporarily stores the environment information. The storage 39 may have a small capacity because the storage 39 does not store all pieces of the measured environment information. The storage 39 may be configured of a RAM, a flash memory, or the like.

The sensor device-side coupling unit 40 is, for example, a connector. A DSC unit-side coupling unit 54 of the DSC unit 5 is connected to the sensor device-side coupling unit 40. That is, the sensor device-side coupling unit 40 allows the DSC unit 5 for supplying the electric power to the sensor device 3 to be detachably attached thereto. Note that, although the sensor device-side coupling unit 40 is used to realize an electrical coupling with the DSC unit-side coupling unit 54, the sensor device-side coupling unit 40 may also serve to realize a structural coupling with the DSC unit 5. That is, the sensor device-side coupling unit 40 may be used to fix the DSC unit 5 to the sensor device 3.

A dye-sensitized solar cell (DSC) unit 5 is a unit of external power that supplies the electric power generated by the solar cell 51 to the sensor device 3 at the time of connection to the sensor device 3.

The solar cell 51 is, for example, a dye-sensitized solar cell that can efficiently generate electric power from an environment with a low light intensity (for example, 10 [lux]) such as under a fluorescent lamp where sufficient power generation efficiency cannot be obtained with a general solar cell to an environment with a high light intensity (for example, 100,000 [lux]) under outdoor sunlight.

The DC/DC converter 52 converts the voltage value of the electric power generated by the solar cell 51, and controls the electricity storage 53 to be charged with the electric power in which the voltage value has been converted. In addition, at the time the DSC unit 5 and the sensor device 3 are connected, the DC/DC converter 52 supplies the electric power stored in the electricity storage 53 and the electric power generated by the solar cell 51 to the sensor device 3.

The electricity storage 53 is, for example, a lithium ion capacitor having a capacity of 40 F (farads). Note that various electricity storage devices (for example, secondary batteries) can be appropriately used for the electricity storage 53.

The electricity storage 53 stores the electric power generated by the solar cell 51 under the control of the DC/DC converter 52. A positive electrode of the electricity storage 53 is connected to the DC/DC converter 52 and the DSC unit-side coupling unit 54, and a negative electrode thereof is grounded.

The DSC unit-side coupling unit 54 is, for example, a connector. The sensor device-side coupling unit 40 of the sensor device 3 is connected to the DSC unit-side coupling unit 54. Note that, although the DSC unit-side coupling unit 54 is used to realize an electrical coupling with the sensor device-side coupling unit 40, the DSC unit-side coupling unit 54 may also serve to realize a structural coupling with the sensor device 3.

The sensor device 3 can be operated, for example, for about 1 year to 2 years in accordance with a use environment without battery replacement by using the electric power of the primary battery 31 included in itself. In addition, in a case in which the DSC unit 5 is coupled to the sensor device 3, the sensor device 3 can be operated, for example, for about 4 years or 5 years, or can be operated for about 10 years depending on an environment, in accordance with a use environment without battery replacement by using the electric power supplied from the primary battery 31 included in itself and from the DSC unit 5.

Next, the master device 6 will be described.

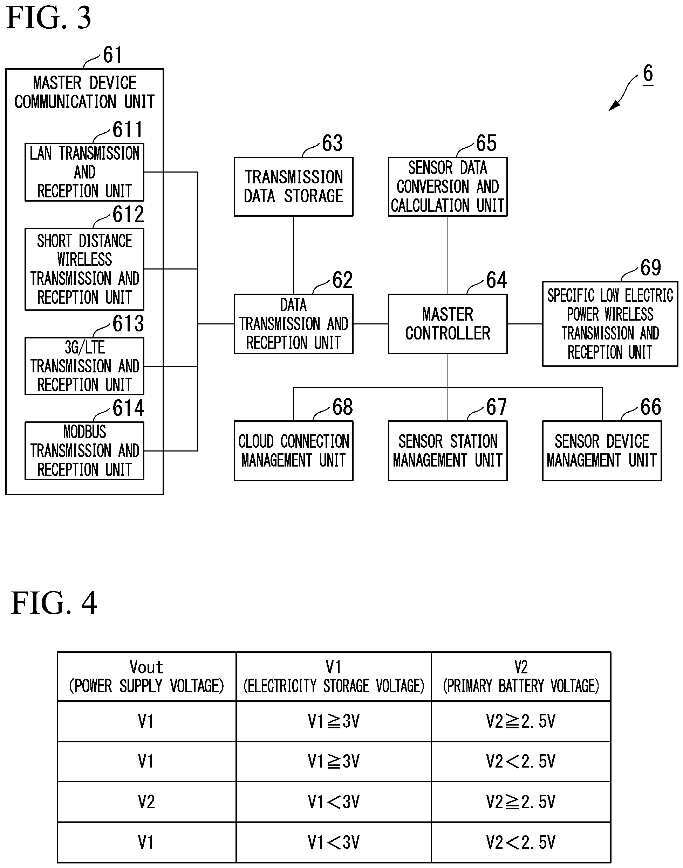

FIG. 3 is a block diagram showing a configuration example of the master device 6 of the present embodiment.

As shown in FIG. 3, the master device 6 includes a master device communication unit 61, a data transmission and reception unit 62, a transmission data storage 63, a master controller 64, a sensor data conversion and calculation unit 65, a sensor device management unit 66, a sensor station management unit 67, a cloud connection management unit 68, and a specific low electric power wireless transmission and reception unit 69.

The master device communication unit 61 transmits information output from the data transmission and reception unit 62 using a transmission and reception unit according to a device of a communication partner. In addition, the master device communication unit 61 receives information using the transmission and reception unit according to the device of the communication partner, and outputs the received information to data transmission and reception unit 62. The master device communication unit 61 includes a local area network (LAN) transmission and reception unit 611 that performs communication using wired communication, a short distance wireless transmission and reception unit 612 that performs communication with a wireless communication standard such as Wi-Fi, a 3G and LTE transmission and reception unit 613 that performs communication using a telephone communication network, a Modbus transmission and reception unit 614 that performs serial communication by Modbus protocol, and the like.

The data transmission and reception unit 62 outputs transmission data output from the master controller 64 to the master device communication unit 61. In addition, the data transmission and reception unit 62 receives the information output from the master device communication unit 61, and outputs the received information to the master controller 64. Note that the data transmission and reception unit 62 modulates a transmission signal and demodulates a reception signal in accordance with the device of the transmission and reception partner. The data transmission and reception unit 62 temporarily stores the information that could not be transmitted in the transmission data storage 63, and performs the transmission again in a case in which it is possible to transmit the information.

The transmission data storage 63 temporarily stores the information or the like that could not be transmitted.

The master controller 64 controls each functional unit of the master device 6.

The sensor data conversion and calculation unit 65 performs calculations such as analysis or conversion of the information received from the sensor device 3.

The sensor device management unit 66 performs management of each sensor device 3 included in the sensor network system 1, various settings for each sensor device 3, individual control for each sensor device 3, and the like. The sensor device management unit 66 may notify that the battery is required to be replaced as maintenance information, for example, in a case in which the voltage value of the primary battery 31 is less than a predetermined value and the operation is interrupted, by referring to the voltage value V1 and the voltage value V2 (or voltage information corresponding to each of the voltage value V1 and the voltage value V2) of each sensor device 3 and the state of the power supply changeover switch 34, which are included in the received information.

In addition, the sensor device management unit 66 may propose attachment of the DSC unit optimum for each of the plurality of sensor devices 3 with reference to the information related to the power generation capacity of the DSC unit 5, which is included in the received information.

The sensor station management unit 67 provides a management function of an internal storage, an external output, and an external reading of the setting of the master device 6.

The cloud connection management unit 68 performs registration of the sensor device 3 in a cloud, a setting storage, a reception of an instruction from the cloud, and the like.

Note that the transmission data storage 63 may be configured by a RAM, a flash memory, or the like, and the master controller 64, the sensor data conversion and calculation unit 65, the sensor device management unit 66, the sensor station management unit 67, and the cloud connection management unit 68 may be a known computer including a CPU, a RAM, a ROM, and the like, which is able to carry out the control, the calculation, and the management described above.

The specific low electric power wireless transmission and reception unit 69 transmits and receives information to and from the sensor system 2 by specific low electric power wireless communication. The specific low electric power wireless transmission and reception unit 69 transmits the information output by the master controller 64 to the sensor system 2. The specific low electric power wireless transmission and reception unit 69 outputs the received information to the master controller 64.

Note that the configuration example of the master device 6 described above is an example, and some of all the functional units described above may be provided, and other functional units may not be provided.

In addition, the master device 6 can change the setting of the sensor device 3.

For example, in a case in which each of the sensor devices 3 includes five sensors, it is possible to freely set a configuration such as selecting any which is cased to be operated among the five sensors, a time interval at which each sensor of the five sensors performs sensing, a time interval of constant communication, and the like, for each sensor device 3. That is, in a case in which the sensor device 3 includes a plurality of sensors, the master device 6 can instruct the sensor device 3 which sensor among the plurality of sensors is to be used. Hereinafter, a procedure thereof will be described.

First, the manager of the sensor network system 1 connects a notebook computer or the like to the master device 6, registers all the sensor devices 3 included in the sensor network system 1 in the master device 6, and also sets the configurations of the sensor devices 3 (manual setting by the manager).

Each of the sensor devices 3 requests the configuration of itself to the master device 6 after an initial setting. Note that a request signal of the sensor device 3 includes the identifier thereof.

Note that the master device 6 may transmit, to each of the sensor devices 3, an instruction to transmit the environment information of the sensor, for example, every one minute for a shorter time interval shorter than an initial setting for transmitting the environment information of the sensor to the master device 6 in an emergency such as a disaster.

When the master device 6 receives the request for the configuration from each sensor device 3, the master device 6 transmits the set configuration to the sensor device 3 that has requested the configuration as a response to the request.

The sensor device 3 performs setting of itself based on the configuration for itself, which is transmitted as the response to the request.

As described above, the sensor device 3 does not have an input key or the like for the manager for performing various settings including the configuration of the sensor device 3.

Next, an example of a threshold used for the comparison by the voltage detection and comparison unit 351 of the sensor device 3 will be described. Note that the voltage detection and comparison unit 351 stores the threshold value.

FIG. 4 is a diagram showing an example of predetermined references to be used for the comparison by the voltage detection and comparison unit 351 of the sensor device 3 of the present embodiment.

As shown in FIG. 4, in a case in which the voltage value V1 of the DSC unit 5 is equal to or greater than 3 V and the voltage value V2 of the primary battery 31 is equal to or greater than 2.5 V, the voltage detection and comparison unit 351 controls the power supply changeover switch 34 so that the electric power of the DSC unit 5 of which the voltage value is V1 is output as Vout.

In a case in which the voltage value V1 of the DSC unit 5 is equal to or greater than 3 V and the voltage value V2 of the primary battery 31 is less than 2.5 V, the voltage detection and comparison unit 351 controls the power supply changeover switch 34 so that so that the electric power of the DSC unit 5 of which the voltage value is V1 is output as Vout.

In a case in which the voltage value V1 of the DSC unit 5 is less than 3 V and the voltage value V2 of the primary battery 31 is equal to or greater than 2.5 V, the voltage detection and comparison unit 351 controls the power supply changeover switch 34 so that the electric power of the primary battery of which the voltage value is V2 is output as Vout.

In a case in which the voltage value V1 of the DSC unit 5 is less than 3 V and the voltage value V2 of the primary battery 31 is less than 2.5 V, the voltage detection and comparison unit 351 controls the power supply changeover switch 34 so that the electric power of the DSC unit 5 of which the voltage value is V1 is output as Vout.

That is, in the example shown in FIG. 4, the threshold values are 2.5 V and 3 V. Note that the threshold value shown in FIG. 4 is an example, and is not limited thereto. The threshold value may be a value corresponding to the voltage of the primary battery 31 or the voltage value supplied from the DSC unit 5.

In addition, when the DSC unit 5 is attached to the sensor device 3, the power supply controller 35 may be configured to switch to the DSC unit 5 in a case in which the voltage (the voltage value V1) of the DSC unit 5 satisfies the predetermined reference and switch to the primary battery 31 in a case in which the voltage of the DSC unit 5 does not satisfy the predetermined reference. For example, when the DSC unit 5 is attached to the sensor device 3, the power supply controller 35 may be configured to switch to the DSC unit 5 in a case in which the voltage (the voltage value V1) of the DSC unit 5 is equal to or greater than a predetermined threshold value and switch to the primary battery 31 in a case in which the voltage of the DSC unit 5 is less than the threshold value.

Note that, in the above-described example, the voltage detection and comparison unit 351 detects the state of the power supply setting switch 41 and determines whether or not the DSC unit 5 is connected to the sensor device 3. However, the present invention is not limited thereto. In a case in which the DSC unit 5 is not coupled to the sensor device 3, the voltage value V1 is 0 V. In such a case, the voltage detection and comparison unit 351 may determine that the DSC unit 5 is not coupled to the sensor device 3, and connect the power supply changeover switch 34 to the primary battery 31 to cause the power supply changeover switch 34 to switch so that the electric power of which the voltage value is V2 is output.

As described above, the sensor device 3 according to the present embodiment includes the sensor device-side coupling unit 40 that is able to connect the DSC unit 5 to the sensor device 3 and also receive the supply of the electric power from the DSC unit 5. In addition, the sensor device 3 is able to switch the electric power supplied to a load by comparing the voltage value V1 supplied from the DSC unit 5, the voltage value V2 of the primary battery 31, and the threshold value.

Therefore, according to the present embodiment, in a case in which the DSC unit 5 that is the external power supply is coupled to the sensor device 3, each of the voltage value of the primary battery 31 and the voltage value of the electricity storage 53 of the unit is detected and the power supply is switched at the determined threshold value. Therefore, the optimized power supply becomes possible, and more stable long-term system operation becomes possible. In a case in which the DSC unit 5 is not connected to the sensor device 3, the sensor device 3 supplies the electric power of the built-in primary battery 31 to the load of the sensor system controller 36, the sensor unit 37, and the sensor device communication unit 38. In addition, in a case in which the DSC unit 5 is coupled to the sensor device 3, the electric power from the DSC unit 5 is supplied to the load, and when the discharging of the electricity storage 53 proceeds, the sensor device 3 switches to the primary battery 31 by the power supply changeover switch 34 to supply electric power to the load. In a case in which the charging of the electricity storage 53 proceeds by the solar cell 51, the sensor device 3 switches to the DSC unit 5 by the power supply changeover switch 34 and resumes the supply of the electric power from the electricity storage 53 to the load.

That is, in a case in which the DSC unit 5 is not attached to the sensor device 3, the sensor device 3 of the present embodiment is configured to operate with the electric power supply from the primary battery 31, and in a case in which the DSC unit 5 is attached to the sensor device 3, the sensor device 3 is configured to operate with the electric power supply from the primary battery 31 or the DSC unit 5.

In addition, according to the present embodiment, even in a case in which only the sensor device 3 having the primary battery 31 is introduced at the start of the system operation, the connection of the DSC unit 5 and the electric power supply from the DSC unit 5 to the sensor device 3 are possible after the operation, by utilizing the sensor device-side coupling unit 40 prepared in the sensor device 3.

Therefore, according to the present embodiment, it is possible to operate the sensor device 3 for a long period of time.

Next, the operation of the sensor device communication unit 38 of the sensor device 3 will be described.

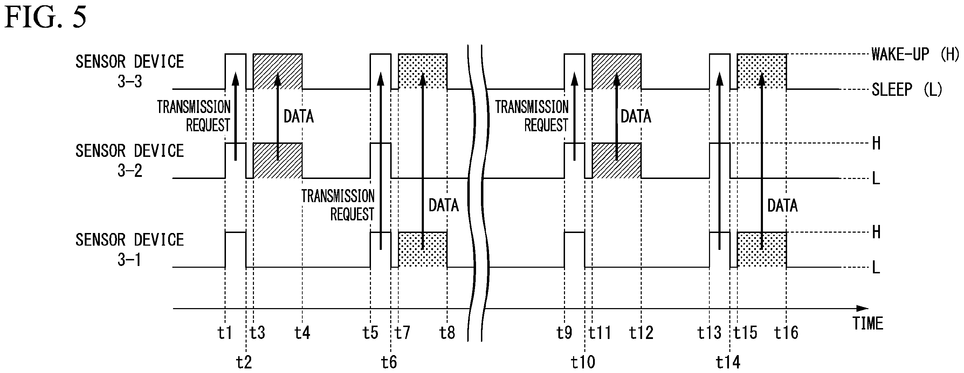

FIG. 5 is a diagram showing an operation example of the sensor device communication units 38 of the plurality of sensor devices 3 of the present embodiment. FIG. 5 shows an example in which three sensor devices 3-1, 3-2, and 3-3 are used. In this case, as shown in FIG. 5, the sensor device 3-1 transmits information to the master device 6 (not shown in FIG. 5) through the sensor device 3-3. In addition, the sensor device 3-2 also transmits information to the master device 6 through the sensor device 3-3.

In FIG. 5, a horizontal axis represents time, a vertical axis represents voltage, L (low) level represents a sleep state of the sensor device, and H (high) level represents a wake-up state of the sensor device. Note that a process shown in FIG. 5 is performed after performing a synchronization process between the sensor devices 3, which will be described later. Therefore, the timing at which the sensor device communication units 38 of the sensor device 3-1, the sensor device 3-2, and the sensor device 3-3 wake up from the sleep state matches each other.

That is, the sensor device communication unit 38 is configured to be regularly switched between the wake-up mode and the sleep mode having power consumption less than that of the wake-up mode and to perform, at the time of operation in the wake-up mode, communication with the sensor device communication unit 38 of the other sensor device 3 that operates in the wake-up mode. In addition, the sensor device communication unit 38 is configured to perform communication with the sensor device communication unit 38 of the other sensor device 3 after acquiring synchronization of the communication timing between the sensor device 3 and the other sensor device 3.

At a time before time t1, the sensor device communication unit 38 of each of the sensor device 3-1, the sensor device 3-2, and the sensor device 3-3 is in the sleep state (electric power saving state). The sensor device communication unit 38 of each of the sensor device 3-1, the sensor device 3-2, and the sensor device 3-3 is changed from the sleep state to the wake-up state at predetermined time intervals (for example, every 1 to 2 seconds). In addition, the sensor device communication unit 38 of each of the sensor device 3-1, the sensor device 3-2 and the sensor device 3-3 shifts to the sleep state again after the wake-up state.

At times t1 to t2 and at times t9 to t10, the sensor device communication unit 38 of the sensor device 3-2 transmits a transmission request to the sensor device 3-3.

At the times t1 to t2 and at the times t9 to t10, the sensor device communication unit 38 of the sensor device 3-3 receives the transmission request transmitted by the sensor device 3-2.

At times t3 to t4 and at times t11 to t12, the sensor device communication unit 38 of the sensor device 3-2 transmits data (the measurement information and the environment information) to the sensor device 3-3.

At the times t3 to t4 and at the times t11 to t12, the sensor device communication unit 38 of the sensor device 3-3 receives the data (the measurement information and the environment information) transmitted by the sensor device 3-2.

At times t5 to t6 and at times t13 to t14, the sensor device communication unit 38 of the sensor device 3-1 transmits a transmission request to the sensor device 3-3.

At the times t5 to t6 and at the times t13 to t14, the sensor device communication unit 38 of the sensor device 3-3 receives the transmission request transmitted by the sensor device 3-1.

At times t7 to t8 and at times t15 to t16, the sensor device communication unit 38 of the sensor device 3-1 transmits data (the measurement information and the environment information) to the sensor device 3-3.

At the times t7 to t8 and at the times t15 to t16, the sensor device communication unit 38 of the sensor device 3-3 receives the data (the measurement information and the environment information) transmitted by the sensor device 3-1.

Note that a communication interval (an interval between the time t1 and the time t9) at which the sensor device communication unit 38 of the sensor device 3-2 transmits the transmission request to the sensor device 3-3 is, for example, 5 minutes, and the same applies to the sensor device 3-1 (an interval between the time t5 and the time t13).

In addition, while transmission is not performed as in an interval between the time t4 and the time t9 in the sensor device 3-2, the sensor device communication unit 38 is changed from the sleep state to the wake-up state at a predetermined time interval (for example, every 1 to 2 seconds).

As described above, the sensor device communication unit 38 included in each of the sensor devices 3 according to the present embodiment is able to be switched between the wake-up mode and the sleep mode. In addition, the sensor device communication unit 38 limits a time zone of mutual communication where electric power consumption is large by acquiring synchronization of a time zone at which the sensor device communication unit 38 operates in the wake-up mode.

As described above, after synchronizing the plurality of sensor devices 3, the sensor device communication unit 38 of the sensor device 3 according to the present embodiment performs an intermittent operation, is in the sleep state for almost all time, and changes to the wakes up state, for example, every 1 to 2 seconds to perform transmission and reception of data if necessary. Therefore, the electric power consumption of the sensor device 3 is able to be reduced, and the sensor device 3 is able to be operated for a long time.

Here, a construction method in such a sensor network system 1 will be described.

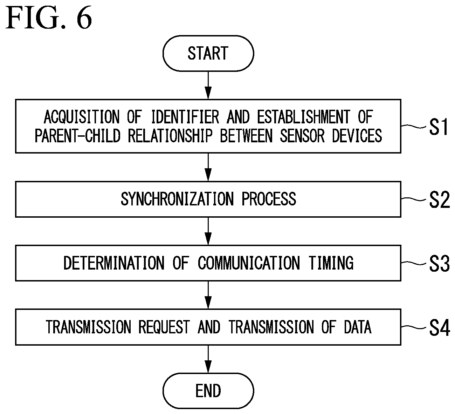

FIG. 6 is a diagram showing an example of a construction procedure in the sensor network system 1 of the present embodiment.

(Step S1) Each of the plurality of sensor devices 3 acquires the identifier thereof from the master device 6 at the time of activation. Subsequently, each of the plurality of sensor devices 3 establishes the parent-child relationship with other between surrounding sensor devices 3. There is no limitation on the method for constructing such a network, but examples include a construction method of ZigBee (registered trademark). Note that the parent-child relationship is a relationship such as passing information in the network such as which sensor device 3 is located upstream and downstream of the network centering on the master device 6 and which sensor device 3 becomes a repeater.

As an example of a procedure for establishing such a parent-child relationship, each sensor device 3 measures, for example, an RSSI when a test signal is received from the other sensor device 3 or the master device 6 through the sensor device communication unit 38 and transmits the RSSI to the other sensor device 3 or the master device 6. Furthermore, each sensor device 3 receives the RSSI between the other sensor devices 3 and the number of hops from each sensor device 3 to the master device 6, and constructs the parent-child relationship and determines the communication path on the basis of the information. Note that the construction of the parent-child relationship and the selection of the path are performed at the time of introduction of the sensor device 3 or at predetermined time intervals (for example, once a day).

(Step S2) Each of the plurality of sensor devices 3 synchronizes the operation time zones of the wake-up mode and the sleep mode. The synchronization method is not particularly limited, but each sensor device communication unit 38 may acquire the synchronization by using time information clocked by the sensor system controller 36 and on the basis of a predetermined set value. Note that the sensor device communication unit 38 may include a clock unit. Here, the electric power consumption is able to be suppressed by setting the time of the sleep mode to, for example, 10 times or more of the time of the wake-up mode.

(Step S3) Each of the plurality of sensor devices 3 determines a schedule for communication among the sensor devices 3. Although a plurality of methods are able to be considered for the determination of the schedule, for example, the sensor devices 3 are mutually adjusted with each other so as not to overlap with the communication between other sensor devices 3.

(Step S4) After synchronization is acquired, each of the sensor devices 3 performs a transmission request in the operation time zone of the wake-up mode, as shown in FIG. 5. Note that, when a receiving-side receives the transmission request, the receiving-side may transmit information for permitting reception as a response. Subsequently, each of the sensor devices 3 performs transmission of data. The sensor device communication unit 38 performs synchronization of the transmission timing by, for example, adjusting the transmission timing thereof to the response of the information for permitting the reception transmitted by the sensor device 3 of the other party.

Note that a transmission packet of the sensor device 3 includes, for example, the ID (the identifier and the identification information) of the master device 6 that is a transmission destination, the identifier (identification number) of the sensor device 3 that is a transmission source, the environment data (the measurement information of the sensor), the voltage value V2 (or the voltage information corresponding to the voltage value V2) of the primary battery 31, the voltage value V1 (or the voltage information corresponding to the voltage value V1) to be output by the DSC unit 5, the information related to the power generation capacity of the DSC unit 5, the state of the power supply setting switch 41, the state of the power supply changeover switch 34, the RSSI (the radio wave intensity of the sensor device 3 of the transmission destination at that time), and the like.

That is, the sensor device 3 is configured to transmit the environment information in which at least the environment data measured by the sensor unit 37 is included, to the master device 6 through the other sensor device 3 or directly in a state in which at least one of the identification number for identifying the sensor device 3, the identification information of the master device 6 that is the transmission destination, the voltage information of the primary battery 31 of the sensor device 3 or the voltage information of the attached DSC unit 5, and the information related to the power generation capacity of the DSC unit 5 is included in the environment information, or is configured to transmit the environment information received from the other sensor device 3 to the master device 6 through further another sensor device 3 or directly.

Note that the sensor device 3 executes "the sensing by the sensor" that is an original role completely independently from a communication protocol.

As described above, in the present embodiment, each of the plurality of sensor devices 3 transmits the "the voltage value V2 (or the voltage information corresponding to the voltage value V2) of the primary battery 31, the voltage value V1 (or the voltage information corresponding to the voltage value V1) output by the DSC unit 5, the information related to the power generation capacity of the DSC unit 5, the state of the power supply setting switch 41, and the state of the power supply changeover switch 34" to the server 7 through the master device 6. In addition, by monitoring with the server 7, medium and long term overall optimization of the sensor network system 1 is able to be realized.

In addition, according to the present embodiment, each of the plurality of sensor devices 3 does not have a display device, an input key, a memory having a large capacity for storing past environmental data for a long term, and the like, which are directly related to the electric power consumption, and thus an electric load is able to be minimized.

In addition, according to the present embodiment, the "attachment at any time" and "detachment at any time" of the DSC unit 5 with respect to the installed sensor device 3 are able to be utilized to the maximum extent.

For example, in a case in which the DSC unit 5 is not attached at the time of the introduction of the sensor network system 1, the DSC unit 5 is able to be "attached at any time" in a case in which the electric power becomes insufficient.

In addition, for example, the DSC unit 5 is attached on an assumption that the sensor device 3 operates as a sensor device 3 that mediates data transmission at the time of introduction for an arbitrary sensor device 3, but in practice the DSC unit 5 may be detached at any time if there is not much need for the DSC unit 5.

In addition, in a case in which the electric power becomes insufficient when the DSC unit 5 is detached from the sensor device 3, a communication frequency in the sensor device 3 may be reduced together to reduce the electric power consumption.

As described above, according to the present embodiment, as a result, the number of DSC units 5 used as a whole is able to be optimized.

As described above, according to the present embodiment, it is possible to correct the system while fixing the sensor device 3 even after the start of the operation of the sensor network system 1 to prosecute optimization later.

Note that, the constitution of the sensor device 3 described using FIG. 2 is an example and is not limited thereto. For example, the sensor device 3 may include a terminal capable of supplying electric power, such as a universal serial bus (USB) terminal.

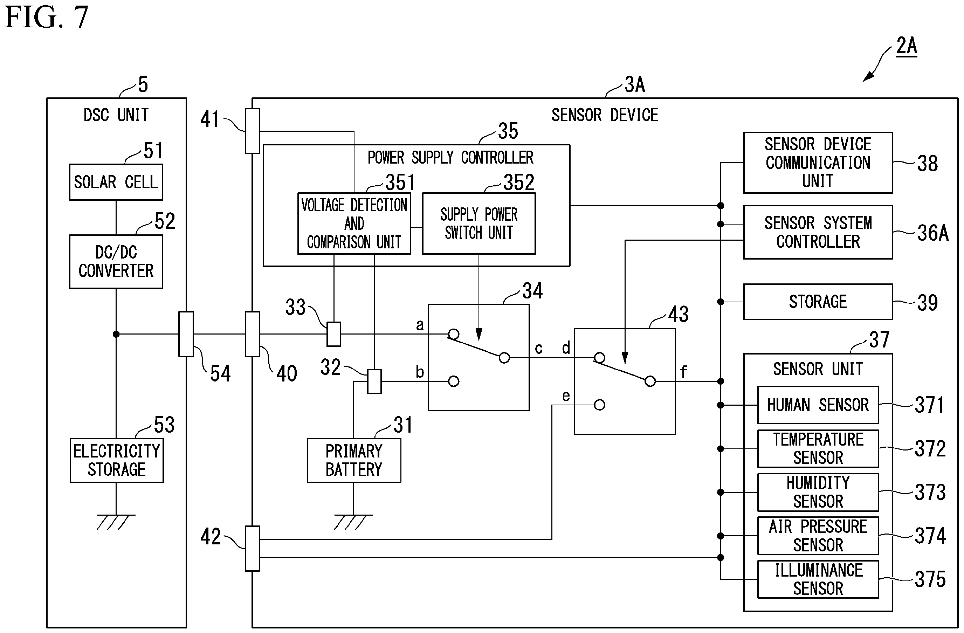

FIG. 7 is a block diagram showing a configuration example of a sensor system 2A including a sensor device 3A provided with a USB terminal of a modification example of the present embodiment.

As shown in FIG. 7, in addition to the constitution of the sensor device 3, the sensor device 3A includes a USB terminal 42 and a USB power changeover switch 43. In addition, the sensor device 3A includes a sensor system controller 36A in place of the sensor system controller 36.

The output terminal c of the power supply changeover switch 34 is connected to an input terminal d of the USB power changeover switch 43.

An input terminal e of the USB power changeover switch 43 is connected to the USB terminal 42, and electric power is supplied from an output terminal f to a load (that is, the sensor system controller 36A, the sensor unit 37, the sensor device communication unit 38, and the like).

In a case in which the sensor system controller 36A detects that a connection cable or the like is connected to the USB terminal 42 and the electric power is able to be supplied from the USB terminal 42 using a known method, the sensor system controller 36A switches the USB power changeover switch 43 so that the electric power supplied from the USB terminal 42 is supplied to the load.

That is, in the sensor device 3A, in a case in which the connection cable is connected to the USB terminal 42 and the electric power is able to be supplied thereto, the load is always driven using this electric power.

In addition, in a case in which the sensor system controller 36A detects that the electric power is able to be supplied from the USB terminal 42 and the DSC unit 5 is attached, the sensor system controller 36A may perform change of the electricity storage 53 by supplying the electric power supplied from the USB to the DSC unit 5 while supplying the electric power supplied from the USB to the load. In this case, the sensor system controller 36A controls the USB power changeover switch 43 so that the input terminal e is connected to the input terminal d and the output terminal f. Alternatively, the sensor device 3A is further provided with a switch between the power supply changeover switch 34 and the USB power changeover switch 43, and the sensor system controller 36A may control the switch to switch the switch so that the electric power supplied from the USB is supplied to the DSC unit 5.

In addition, in the present modification example, the manager may switch the power supply by switching the power supply setting switch 41. That is, a first state of the power supply setting switch 41 is a state in which the sensor device 3 is always operated by the USB electric power, a second state is a state in which the sensor device 3 is always operated by the primary battery 31, and a third state is a state in which the sensor device 3 is always operated by the primary battery 31 or the DSC unit 5.

Also at this time, in a case in which it is detected that electric power is able to be supplied from the USB terminal 42 and the DSC unit 5 is attached, the electricity storage 53 may be charged by supplying the electric power supplied from the USB to the DSC unit 5 regardless of the state of the power supply setting switch 41.

As described above, according to the embodiment, it is possible to construct a highly maintainable sensor system that is also able to be operated by the inexpensive primary battery built into the sensor device body and is able to realize self-reliance power by connecting the energy harvesting unit later when the necessity of the self-reliance power by the energy harvesting type power is able to be confirmed.

### Description of Reference Signs

- 1: Sensor network system
- 2: Sensor system
- 3, 3A: Sensor device
- 5 DSC: unit (auxiliary battery)
- 31: Primary battery (battery)
- 32: Primary battery voltage detector
- 33: Electricity storage voltage detector
- 34: Power supply changeover switch
- 35: Power supply controller (controller)
- 36, 36A: Sensor system controller
- 37: Sensor unit
- 38: Sensor device communication unit
- 39: Storage
- 40: Sensor device-side coupling unit
- 41: Power supply setting switch
- 42: USB terminal
- 43: USB power changeover switch
- 51: Solar cell
- 52: DC/DC converter
- 53: Electricity storage
- 54: DSC unit-side coupling unit
- 351: Voltage detection and comparison unit
- 352: Power supply switch unit
- 371: Human sensor
- 372: Temperature sensor
- 373: Humidity sensor
- 374: Air pressure sensor
- 375: Illuminance sensor

## Claims

1. A sensor device comprising:
a sensor that detects environment information;
a sensor device communication unit configured to transmit the detected environment information to another sensor device;
a battery that supplies electric power to the sensor and the sensor device communication unit; and
a sensor device-side coupling unit configured to allow an auxiliary battery for supplying electric power to the sensor device to be detachably attached thereto,
wherein, in a case in which the auxiliary battery is not attached, the sensor device is configured to operate with electric power supply from the battery, and in a case in which the auxiliary battery is attached, the sensor device is configured to operate with electric power supply from the battery or the auxiliary battery.

2. The sensor device according to claim 1, further comprising:
a controller configured to switch to the auxiliary battery in a case in which a voltage of the auxiliary battery satisfies a predetermined reference and to switch to the battery in a case in which the voltage of the auxiliary battery does not satisfy the predetermined reference, when the auxiliary battery is attached.

3. The sensor device according to claim 1 or 2, wherein the sensor device is configured to transmit environment information received from a first other sensor device to a second other sensor device.

4. The sensor device according to any one of claims 1 to 3, wherein the sensor device communication unit is configured to be regularly switched between a wake-up mode and a sleep mode having power consumption less than that of the wake-up mode, and to perform, at a time of operation in the wake-up mode, communication with a sensor device communication unit of another sensor device that operates in a wake-up mode.

5. The sensor device according to claim 4, wherein the sensor device communication unit is configured to perform the communication with the sensor device communication unit of the other sensor device after acquiring synchronization of communication timing between the sensor device and the other sensor device.

6. The sensor device according to any one of claims 1 to 5, further comprising:
a switch configured to switch between operating with the electric power supply from the battery and operating with the electric power supply from the battery or the auxiliary battery.

7. The sensor device according to claim 1, wherein the sensor device communication unit is configured to further transmit, to the other sensor device, information related to a voltage of the battery or information related to a voltage of the auxiliary battery.

8. The sensor device according to claim 1, wherein the sensor device communication unit is configured to further transmit, to the other sensor device, information related to a state of a switch for setting a power supply that supplies electric power to the sensor device.

9. The sensor device according to claim 1, wherein the sensor device communication unit is configured to further transmit, to the other sensor device, information related to a power supply that supplies electric power to the sensor device.

10. The sensor device according to claim 1, wherein the sensor device communication unit is configured to further transmit, to the other sensor device, information related to a radio wave intensity between the sensor device and the other sensor device.

11. The sensor device according to any one of claims 7 to 10, further comprising:
a storage that temporarily stores the environment information; and
a controller that discards the environment information stored in the storage in a case in which the environment information has not been transmitted to the other sensor device a predetermined number of times.

12. The sensor device according to claim 1, wherein the sensor device communication unit is configured to receive setting information for the sensor device, and
the sensor device is configured to set itself based on the setting information.

13. The sensor device according to claim 12, wherein the sensor includes a plurality of sensors that detect different types of environment information, and
the setting information includes information indicating one or more sensors to be used among the plurality of sensors.

14. The sensor device according to claim 12, wherein the setting information includes information related to a time interval for transmitting the environment information.

15. A sensor network system comprising:
the sensor device according to any one of claims I to 14; and
a master device that receives the environment information from the sensor device and manages the environment information and the sensor device,
wherein the sensor device is configured to transmit the environment information to the master device through another sensor device or directly in a state in which at least one of an identification number for identifying the sensor device, identification information of the master device that is a transmission destination, voltage information of the battery of the sensor device or voltage information of the attached auxiliary battery, and information related to power generation capacity of the auxiliary battery is included in the environment information, or is configured to transmit the environment information received from another sensor device to the master device through further another sensor device or directly, and
in a case in which the sensor device includes a plurality of sensors, the master device is configured to indicate which one of the plurality of sensors to be used.
